# EUROPEAN PATENT APPLICATION

(11) **EP 2 426 985 A1**
(43) Date of publication of application: **07.03.2012**
(21) Application number: 10769846.6
(22) Date of filing: 30.04.2010
(51) Int. Cl.: H04W 28/10, H04W 48/06, H04W 72/12, H04W 84/10, H04W 92/12

(54) **WIRELESS BASE STATION**

(30) Priority: 01.05.2009 JP 2009112302
(71) Applicant: NTT DOCOMO, INC., Chiyoda-ku Tokyo 100-6150 (JP)
(72) Inventor: FUJII, Masahiro, Tokyo 100-6150 (JP); YAJIMA, Tatsuro, Tokyo 100-6150 (JP); HANAKI, Akihito, Tokyo 100-6150 (JP); OYANE, Hidehiko, Tokyo 100-6150 (JP)
(74) Representative: HOFFMANN EITLE
(86) International application number: PCT/JP2010/057715
(87) International publication number: WO 2010/126148

(57) **Abstract**

A radio base station BTS includes an upper limit value management unit 22 configured to determine and manage a upper limit value common to all mobile stations UE based on a bandwidth capable of being used for transmitting the uplink data in a wired section (Iub) between the radio base station and a radio network controller and a scheduling unit 23 configured to determine an Absolute Grant (AG) to be transmitted to a mobile station UE which is subjected to scheduling of the high-speed uplink communication so as not to exceed the upper limit value. The upper limit value management unit 22 is configured to decrease the upper limit value when a congestion signal in the wired section (Iub) is received for a predetermined number of times during a first predetermined interval of time.

## Description

### TECHNICAL FIELD

The present invention relates to a radio base station.

### BACKGROUND ART

Recently, it has been considered that a small-sized radio base station (hereinafter referred to as a femto radio base station) BTS which is capable of forming a small communication area, called a femtocell, is installed in a user's house and the like.

However, such femto radio base station BTS has been considered to be used with connecting to a best effort type access line (general purpose broadband access line) which is provided in a user's house, and thus is affected by the traffics of other devices which are connected to the general purpose access line. Accordingly, as compared with the case where the femto radio base station BTS is used with connecting to a bandwidth-guaranteed dedicated access line, there is a problem in that a possibility of a loss of uplink data (packet loss) becomes higher in a wired section (Iub) between a radio network controller RNC and the radio base station BTS.

### SUMMARY OF THE INVENTION

A radio base station according to the first feature is summarized in that a radio base station used in a mobile communication system in which a mobile station is configured to determine transmission power of uplink data to be transmitted via a dedicated data channel for a high-speed uplink communication based on a transmission power ratio between the dedicated data channel for the high-speed uplink communication and a dedicated control channel for a normal uplink communication, which corresponds to a received scheduling grant information and the radio base station includes an upper limit value management unit configured to determine and manage a upper limit value common to all mobile stations based on a bandwidth capable of being used for transmitting the uplink data in a wired section between the radio base station and a radio network controller; and a scheduling unit configured to determine a scheduling grant information to be transmitted to a mobile station which is subjected to scheduling of the high-speed uplink communication so as not to exceed the upper limit value. The upper limit value management unit is configured to decrease the upper limit value when a congestion signal in the wired section is received for a predetermined number of times during a first predetermined interval of time.

### BRIEF DESCRIPTION OF THE DRAWINGS

[Fig. 1] Fig. 1 is an entire configuration diagram of a mobile communication system according to a first embodiment of the invention.
[Fig. 2] Fig. 2 is a functional block diagram of a radio network controller according to the first embodiment of the invention.
[Fig. 3] Fig. 3 is a drawing for illustrating an operation of an RLC layer function unit in the radio network controller according to the first embodiment of the invention.
[Fig. 4] Fig. 4 is a functional block diagram of the radio base station according to the first embodiment of the invention.
[Fig. 5] Fig. 5 is a drawing for illustrating an upper limit value which is managed by the radio base station according to the first embodiment of the invention.
[Fig. 6] Fig. 6 is a drawing for illustrating an upper limit value which is managed by the radio base station according to the first embodiment of the invention.
[Fig. 7] Fig. 7 is a flowchart showing an operation of the radio base station according to the first embodiment of the invention.
[fig. 8] Fig. 8 is a flowchart showing an operation of the radio base station according to the first embodiment of the invention.

### MODE FOR CARRYING OUT THE INVENTION

### (Configuration of a mobile communication system according to a first embodiment of the invention)

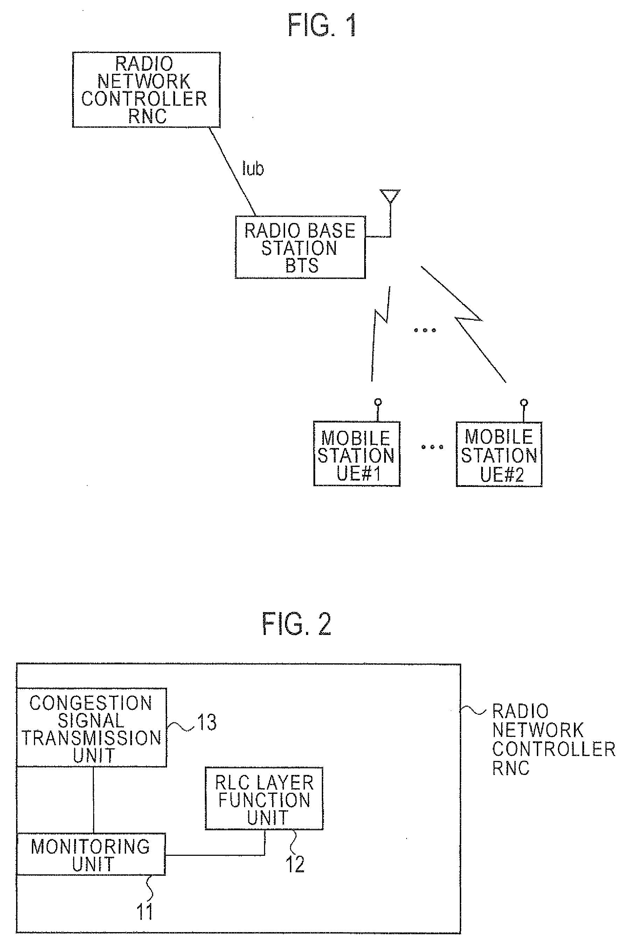

Referring to Figs. 1 through 6, the configuration of a mobile communication system according to a first embodiment of the invention is described.

As shown in Fig. 1, the mobile communication system according to the present embodiment includes a radio network controller RNC, a radio base station BTS, and multiple mobile stations UE#1, UE#2.

The mobile communication system according to the embodiment is capable of performing EUL (Enhanced Uplink) communications of a "Time & Rate" method. Specifically, in the mobile communication system according to the embodiment, a mobile station UE is configured to determine transmission power of uplink data (MAC-e PDU) which is transmitted via E-DPDCH (E-DCH Dedicated Physical Data Channel, dedicated data channel for a high-speed uplink communication) based on a transmission power ratio between the E-DPDCH and DPCCH (Dedicated Physical Control Channel, dedicated control channel for a normal uplink communication), which correspond to a received AG (Absolute Grant, Scheduling Grant).

Moreover, it is assumed in the mobile communication system according to the embodiment that the radio base station BTS is a femto radio base station BTS which is installed in a user' s house or the like, and that a wired section (Iub) between the radio network controller RNC and the radio base station BTS is configured of not a guaranteed bandwidth type dedicated access line but a best effort access line (general purpose broadband access line).

As shown in Fig. 2, the radio network controller RNC according to the embodiment includes a monitoring unit 11, an RLC layer function unit 12, and a congestion signal transmission unit 13.

The monitoring unit 11 is configured to monitor if the uplink data (MAC-e PDU) is lost in the wired section (IuB) between the radio network controller RNC and the radio base station BTS.

Specifically, the monitoring unit 11 is configured to monitor if the uplink data (MAC-e PDU) is lost by referring to a sequence number of the uplink data (MAC-e PDU).

In addition, when detecting that the uplink data (MAC-e PDU) is lost, the monitoring unit 11 is configured to notify the RLC layer function unit 12 and the congestion signal transmission unit 13 of the lost.

The RLC layer function unit 12 is configured to perform processing of RLC (Radio Link Control) layer with an RLC layer function unit of a mobile station UE.

For example, as shown in Fig. 2, the RLC layer function unit 12 is configured to transmit a request for retransmission of the lost uplink data (MAC-e PDU) to the RLC function unit of the mobile station UE if the RLC layer function unit 12 received a notification from the monitoring unit 11.

The congestion signal transmission unit 13 is configured to transmit a congestion signal to the radio base station BTS based on the notification from the monitoring unit 11.

For example, the congestion signal may be "TNL Congestion-detected by frame loss (hereinafter, TNL congestion)" which is standardized by the section 5.14 of TS25.427 of the 3GPP. Here, the "TNL Congestion" is configured to be transmitted for every logical channel.

Note that, the congestion signal transmission unit 13 may be configured to transmit a congestion signal to the radio base station BTS if a situation of the lost uplink data (MAC-e PDU) satisfies a predetermined condition.

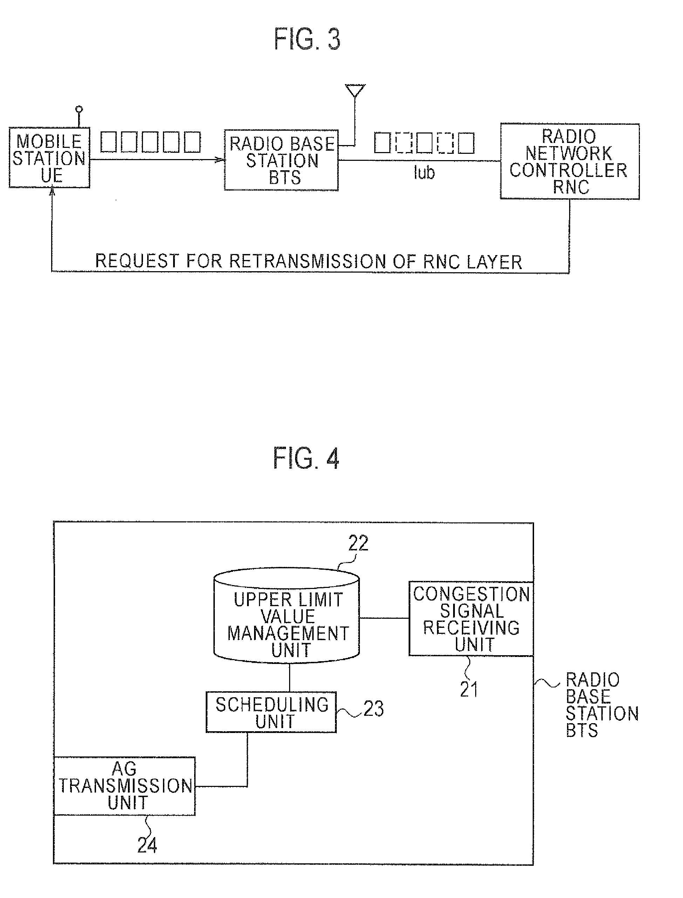

As shown in Fig. 4, the radio base station BTS includes a congestion signal receiving unit 21, an upper limit value management unit 22, a scheduling unit 23, and an AG transmission unit 24.

The scheduling unit 23 is configured to determine a mobile station UE which is subjected to scheduling of the EUL communication and an AG to be transmitted to the mobile station UE which is subjected to the scheduling in each scheduling interval.

Here, each scheduling interval is formed of one or multiple TTIs (Transmission Time Intervals).

Note that if the EUL communication of the "Time & Rate" method is performed, the scheduling unit 23 is configured to use one mobile station as a mobile station UE which is subjected to scheduling of the EUL communication in each scheduling interval.

Also, the scheduling unit 23 is configured to determine an AG to be transmitted to the mobile station UE which is subjected to scheduling of the EUL communication so as not to exceed an upper limit value which is managed by the upper limit value management unit 22.

Here, the upper limit value is an upper limit value of SG (Scheduling Grant) which is managed by the mobile station UE.

The AG transmission unit 24 is configured to transmit the AG which is determined by the scheduling unit 23 to the mobile station UE which is determined to be subjected to scheduling by the scheduling unit 23.

In addition, if the EUL communication of the "Time & Rate" method is performed, when the mobile station UE which is subjected to scheduling of the EUL communication is switched, the AG transmission unit 24 is configured to transmit the AG determined by the scheduling unit 23 to a mobile station UE which is subjected to scheduling of the EUL communication in the next scheduling interval, and to transmit an AG (Zero Grant) instructing to stop transmission of the uplink data via E-DPDCH in the next scheduling interval to a mobile station UE which is subjected to scheduling of the EUL communication in the current scheduling interval.

The congestion signal receiving unit 21 is configured to receive a congestion signal which is transmitted by the radio network controller RNC. Moreover, the congestion signal receiving unit 21 is configured to notify the upper limit value management unit 22 of the reception of the congestion signal.

The upper limit value management unit 22 is configured to determine and manage a upper limit value common to all the mobile stations UE based on a bandwidth capable of being used for transmitting the uplink data (MAC-e PDU) within the wired section (Iub) between the radio base station BTS and the radio network controller RNC.

As described above, the "TNL Congestion" is configured to be transmitted for every logical channel. However, the wired section (Iub) which is configured of the best effort access line (general purpose broadband access line) is physically shared by the multiple mobile stations UEs. Thus, if the uplink data (MAC-e PDU) is lost in the logical channel for a specific mobile station UE, it is assumed that a loss of the uplink data (MAC-e PDU) may most likely occur in the logical channels of the other mobile stations UE as well.

For this reason, as described above, the upper limit value management unit 22 is configured to manage one upper limit value which is common to all the mobile stations UE.

In addition, the upper limit value management unit 22 may be configured to decrease an upper limit value if the "TNL Congestion (congestion signal)" in the wired section (Iub) is received for a predetermined number of times during a first predetermined interval of time.

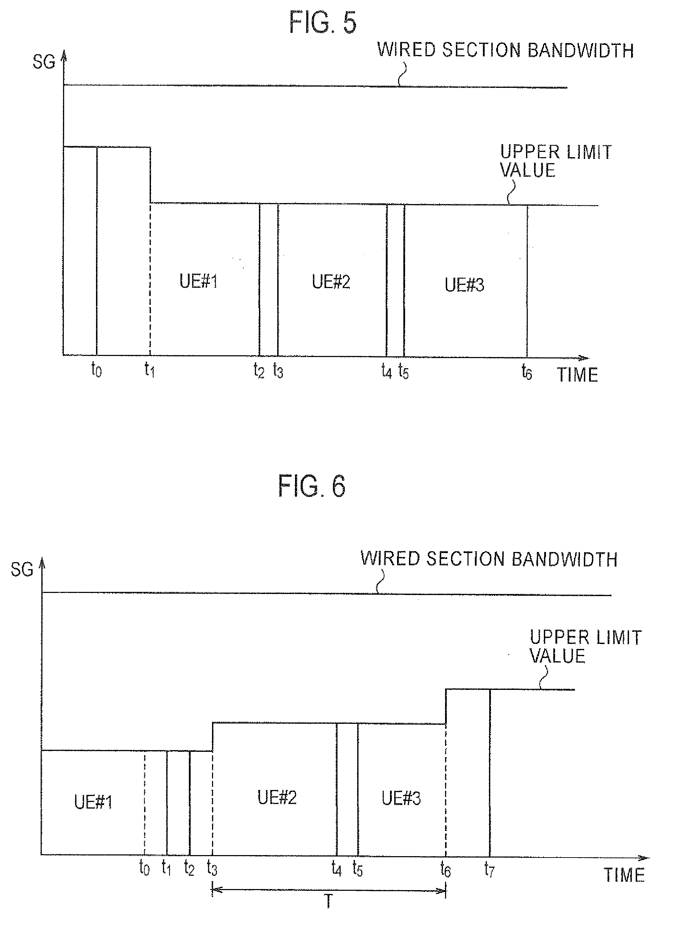

For example, as shown in Fig. 5, the upper limit value management unit 22 is configured to decrease the upper limit value at t0 when the "TNL Congestion" is received for the predetermined number of times during the first predetermined interval of time after the mobile station UE#1 becomes a mobile station UE which is subjected to scheduling at t1.

Here, the "TNL Congestion" may be one transmitted to the logical channel for the mobile station UE#1 or one transmitted to another logical channel.

Then, the scheduling unit 23 is configured to determine an AG to be transmitted to the mobile station UE#1 so as not to exceed the decreased upper limit value, after t0.

After that, even after the mobile station UE#2 becomes a mobile station UE which is subjected to scheduling at t3, the scheduling unit 23 is configured to determine an AG to be transmitted to the mobile station UE#2 so as not to exceed the decreased upper limit value.

In addition, even after the mobile station UE#3 becomes a mobile station which is subjected to scheduling at t5, the scheduling unit 23 is configured to determine an AG to be transmitted to the mobile station UE#3 so as not to exceed the decreased upper limit value.

Also, the upper limit value management unit 22 may be configured to increase the upper limit value if the "TNL Congestion (congestion signal)" is not received during a second predetermined interval of time.

For example, as shown in Fig. 6, the upper limit value management unit 22 is configured to increase the upper limit value at t6 because the "TNL Congestion (congestion signal)" is not received during the second predetermined interval of time T from t3 to t6.

Here, the "TNL Congestion" may be one transmitted to a logical channel of the mobile station UE#2 or UE#3 or one transmitted to another logical channel.

Then, after t6, the scheduling unit 23 is configured to determine an AG to be transmitted to the mobile station UE#3 so as not to exceed the increased upper limit value.

### (Operation of the mobile communication system according to the first embodiment of the invention)

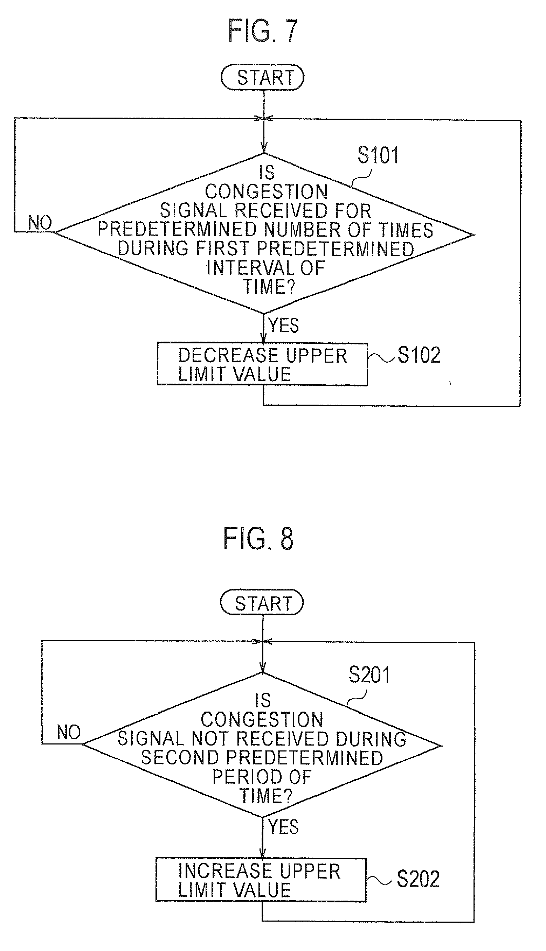

Hereinafter, by referring to Figs. 7 and 8, the operation of the mobile communication system according to the present embodiment, in particular, the operation of the radio base station BTS according to the embodiment is described.

Firstly, by referring to Fig. 7, the operation 1 of the radio base station BTS according to the embodiment is described.

As shown in Fig. 7, at step S101, the radio base station BTS determines if a congestion signal is received for a predetermined number of times from the radio network controller RNC during the first predetermined interval of time.

If determining that the congestion signal is received for the predetermined number of times during the first predetermined interval of time at step S102, the radio base station BTS decreases the upper limit val ue. On the other hand, if the radio base station BTS determines that the congestion signal is not received for the predetermined number of times during the first predetermined interval of time, the current operation returns to step S101.

Secondly, by referring to Fig. 8, the operation 2 of the radio base station BTS according to the embodiment is described.

As shown in Fig. 8, at step S201, the radio base station BTS determines if the congestion signal is received from the radio network controller RNC during a second predetermined interval of time.

If determining that the congestion signal is not received during the second predetermined interval of time at step S202, the radio base station BTS increases the upper limit value. On the other hand, if the radio base station BTS determines that the congestion signal is received for the predetermined number of times during the first predetermined interval of time, the current operation returns to step S201.

### (Advantageous effects of the mobile communication system according to the first embodiment of the invention)

According to the mobile communication system regarding the first embodiment of the invention, no matter which of mobile stations UEs the "TNL Congestion" is transmitted to a logical channel for, the radio base station BTS is configured to decrease the upper limit value common to all the mobile stations UE if the congestion signal is received for the predetermined number of times during the first predetermined interval of time. Accordingly, it is possible to avoid a situation where unnecessary congestion is caused in the wired section (Iub) every time the mobile station UE which is subjected to scheduling is switched in the EUL communication of the "Time & Rate" method.

In addition, according to the mobile communication system regarding the first embodiment of the invention, the radio base station BTS is configured to increase the upper limit value common to all the mobile stations UE if the congestion signal is not received during the second predetermined interval of time. Accordingly, if the congestion in the wired section (Iub) is resolved, the upper limit value is returned to the original value, so that utilization efficiency of the system is improved.

The above-described characteristics of the embodiment may be expressed in the following manner.

A first characteristic of the embodiment is a radio base station BTS which is used in a mobile communication system in which a mobile station UE is configured to determine transmission power of uplink data to be transmitted via E-DPDCH (dedicated data channel for a high-speed uplink communication) based on a transmission power ratio between the E-DPDCH and DPCCH (dedicated control channel for a normal uplink communication), which correspond to a received AG (scheduling grant information). The radio base station BTS includes an upper limit value management unit 22 configured to determine and manage a upper limit value common to all the mobile stations UE based on a bandwidth capable of being used for transmitting uplink data in a wired section (Iub) between the radio base station BTS and a radio network controller RNC, and a scheduling unit 23 configured to determined an AG (scheduling grant information) to be transmitted to a mobile station UE which is subjected to scheduling of the EUL communication (high-speed uplink communication) so as not to exceed the upper limit value, in which the upper limit value management unit 22 is configured to decrease the upper limit value when a "TNL Congestion (congestion signal)" in the wired section (Iub) is received for a predetermined number of times during a first predetermined interval of time.

In the first characteristic of the embodiment, the upper limit value management unit 22 may be configured to increase the upper limit value if the "TNL Congestion (congestion signal)" is not received during a second predetermined interval of time.

The first characteristic of the embodiment may be configured such that, the scheduling unit 23 is configured to use one mobile station as a mobile station UE which is subjected to scheduling of the EUL communication in each scheduling interval, and it includes an AG transmission unit 24 configured to transmit an AG determined by the scheduling unit 23 to a mobile station UE which is subjected to scheduling of the EUL communication in the next scheduling interval, and to transmit an AG (Zero Grant) instructing to stop the transmission of the uplink data via E-DPDCH in the next scheduling interval to a mobile station UE which is subjected to scheduling of the EUL communication in the current scheduling interval, when the mobile station UE which is subjected to scheduling of the EUL communication is switched.

Note that operations of the above-described radio network controller RNC radio base station BTS, or mobile station UE may be implemented by hardware or may be implemented by a software module to be executed by a processor, or may be implemented in combination of the both.

The software module may be provided in any type of storage medium such as a RAM (Random Access Memory), a flash memory, a ROM (Read Only Memory), an EPROM (Erasable Programmable ROM), an EEPROM (Electronically Erasable and Programmable ROM), a register, a hard disk drive, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in radio network controller RNC radio base station BTS, or mobile station UE. Also, the storage medium and the processor may be provided in radio network controller RNC radio base station BTS, or mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the scope of the present invention defined by the description of the scope of claims. Thus, what is described herein is for illustrative purpose, and has no intention whatsoever to limit the present invention.

### INDUSTRIAL APPLICABILITY

As described above, the present embodiment provides a radio base station which is capable of securing the continuity of uplink data and guarantee normal connection even when a radio base station is connected to a best effort access line.

## Claims

1. A radio base station which is used in a mobile communication system in which a mobile station is configured to determine transmission power of uplink data to be transmitted via a dedicated data channel for a high-speed uplink communication based on a transmission power ratio between the dedicated data channel for the high-speed uplink communication and a dedicated control channel for a normal uplink communication, which correspond to a received scheduling grant information, the radio base station, comprising:
an upper limit value management unit configured to determine and manage an upper limit value common to all mobile stations based on a bandwidth capable of being used for transmitting the uplink data in a wired section between the radio base station and a radio network controller; and
a scheduling unit configured to determine a scheduling grant information to be transmitted to a mobile station which is subjected to scheduling of the high-speed uplink communication so as not to exceed the upper limit value, wherein
the upper limit value management unit is configured to decrease the upper limit value when a congestion signal in the wired section is received for a predetermined number of times during a first predetermined interval of time.

2. The radio base station according to claim 1, wherein the upper limit value management unit is configured to increase the upper limit value when the congestion signal is not received during a second predetermined interval of time.

3. The radio base station according to claim 1 or 2, wherein
the scheduling unit is configured to use one mobile station as a mobile station which is subjected to scheduling of the high-speed uplink communication in each scheduling interval, and
the radio base station comprising a scheduling grant information transmission unit configured to transmit the scheduling grant information determined by the scheduling unit to a mobile station which is subjected to scheduling of the high-speed uplink communication in a next scheduling interval, and to transmit scheduling grant information instructing to stop transmission of the uplink data via the dedicated data channel for the high-speed uplink communication in the next scheduling interval to a mobile station which is subjected to scheduling of the high-speed uplink communication in a current scheduling interval, when the mobile station which is subjected to scheduling of the high-speed uplink communication is switched.
